# EUROPEAN PATENT APPLICATION

(11) **EP 2 983 332 A1**
(43) Date of publication of application: **10.02.2016**
(21) Application number: 14306260.2
(22) Date of filing: 08.08.2014
(51) Int. Cl.: H04L 12/52, H04J 14/08

(54) **Line card, back panel system and time division multiplex switching system**

(71) Applicant: ALCATEL LUCENT, 92100 Boulogne-Billancourt (FR)
(72) Inventor: Löhr, Jürgen, 70435 Stuttgart (DE); Hermsmeyer, Christian, 70435 Stuttgart (DE); Beisel, Werner, 70435 Stuttgart (DE)
(74) Representative: MERH-IP Matias Erny Reichl Hoffmann Patentanwälte PartG mbB

(57) **Abstract**

Proposed is an Input/Output-Card for a Time Division Multiplex Switching System. The card comprises a back panel connector comprising a number of pins that are connectable to a back panel system, at least one control interface, at least one line interface, operable to receive at its input an input data signal having a fixed data rate, a signal framer, which is configurable via the control interface to map the input data signal from one or more of its input ports onto one or more TDM slotted signals provided at respective ones of its output ports, and a TDM switch, comprising a first number of ports that are connected to respective ones of the output ports of the signal framer, the switch furthermore comprising a second number of ports that are connected to respective pins of the back panel connector.

## Description

### Field of the invention

The invention relates to a line card for a time division multiplex (TDM) switching system, to a back panel system and to a TDM Switching System.

### Background

For the purpose of interconnecting different data lines in the way of switching line data signals between the respective data lines, it is a prominent approach to rely on a system using TDM switching. In such a TDM switching system, different line cards, preferably called Input/Output (I/O)-cards, each carry one or more of line interfaces. The I/O-cards receive and/or send the line data signals that are switched by at least one TDM switching card, which is separate from the line cards. Each line card provides its line data signals as respective TDM slotted signals to the separate switching card. The TDM switching card performs the switching of the TDM slotted signals.

Such systems of TDM switching are well known for example from cross-connect systems or add-drop multiplexers, e.g. implementing the SDH/Sonet and/or OTN transmission standards. The acronym SDH stands for Synchronous Digital Hierarchy, while the acronym OTN stands for Optical Transport Network. Known architectures of TDM switching systems have limitations in a sense that the card slots of the system house either switch cards or I/O-cards, thus limiting the system configurability.

The TDM signals switched by such a switching card are for example TDM entities such as a VC-n entity in an SDH system or an ODUk entity in an OTN system.

When building a TDM switching system as described above, the dimensioning of the TDM switching card not only determines the connectivity and the configurability as mentioned above, but also the initial costs that have to be brought up for building the TDM switching system at the initial start. A system with a relatively low number of I/O-cards has a relatively high initial cost when dimensioning the TDM switching card in order to ensure that at a later point of time further I/O-cards may be connected to the TDM switching system later on. In other words, the TDM switching card needs to be fully equipped and dimensioned at the initial start even when foreseeing a low initial number of I/O-cards at the initial start.

### Summary

Proposed is an Input/Output-Card for a Time Division Multiplex Switching System,
comprising
- a back panel connector comprising a number of pins that are connectable to a back panel system,
- at least one control interface,
- at least one line interface, operable to receive at its input an input data signal having a fixed data rate,
- at least one signal framer, which is configurable via the control interface to map the input data signal from one or more of its input ports onto one or more TDM slotted signals provided at respective ones of its output ports,
- a TDM switch, comprising a first number of ports that are connected to respective ones of the output ports of the signal framer, the switch furthermore comprising a second number of ports that are connected to respective pins of the back panel connector,
   wherein the TDM switch is configurable via the control interface to choose a switching of the TDM slotted signals received from the framer at the first ports of the switch onto one or more of the second ports of the switch.
Proposed is furthermore a back panel system,
comprising
- a number of back panel slots connectable to respective I/O-cards,
- at least one control card slot connectable to a control card,
- a back panel mesh, directly interconnecting pins of different ones of the back panel slots and furthermore interconnecting pins of the control card slot with pins of the back panel slots,
- at least one control card, connectable to the control card slot and furthermore operable to provide at its output ports control signals for configuring a framer and a TDM switch of an I/O-card.
Proposed is furthermore a Time Division Multiplex Switching System,
comprising
- at least two of the proposed I/O-Cards,
- the proposed back panel system,
- and at least one control card, connectable to the control card slot of the back panel system and furthermore operable to provide at its output ports control signals for configuring a framer and a TDM switch of the I/O-cards.

The resulting TDM Switching System is capable of providing non-blocking connectivity for data signals between all the different interfaces, which are preferably called line ports. This is achieved without the need for one or more separate switching cards performing TDM switching.

### Brief Description of the Figures

Figure 1 shows a proposed I/O-card according to an embodiment.
Figure 2 shows a proposed TDM switching system with a proposed back panel system according to an embodiment.

### Description of Embodiments

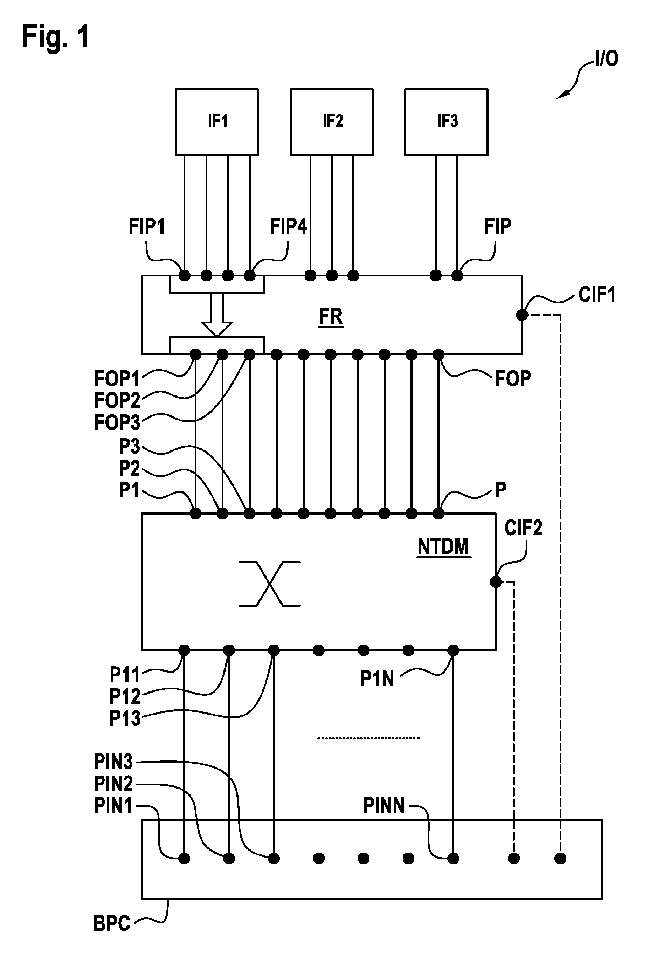

Figure 1 shows an I/O-card IO with a number of line interfaces IF1, IF2, IF3. The line interfaces IF1, IF2, IF3 are operable to receive respective input data signals, preferably called line signals, of respective fixed data rates. The input data signals received at the interfaces IF1, ..., IF3 can be optical or electrical signals. The respective data rates supported by the respective interfaces may differ from each other. An input data signal may for example be an Ethernet signal, alternatively an SDH signal or even further alternatively an OTN signal.

Each interface IF1, ..., IF3 is connected to one or more input ports FIP1, .., FIP4, which are physical input ports, of a framer FR. An interface IF1, ..., IF3 provides its respective line signal, by providing at the one or more input ports FIP1, ..., FIP4 respective sequential signals, which are preferably electrical signals. Thus, a set of input ports FIP1, ..., FIP4 to which a specific interface IF1 is connected forms a so-called logical port.

It has to be noted that the depicted single framer FR is only an example. Alternatively, several components could be used to implement the function indicated by the framer FR in this description.

Furthermore, it has to be note that the choice of four input ports FIP1, ..., FIP4 interconnecting the interface IF1 and the framer FR is only a non-limiting example. The description applies equally for different numbers than four interconnections.

The data rate of an input data signal that can be supported by an interface IF1, ..., IF3 is directly configured at the respective interface.

The framer FR maps the input data signal received at the ports FIP1, ..., FIP4 onto TDM slotted signals provided at respective output ports FOP of the framer FR, as indicated in figure 1.

Figure 1 only explicitly illustrates such mapping for mapping the line signal for the interface IF1 onto output ports FOP1, FOP2, FOP3 of the framer FR. A person skilled in the art clearly understands, that a mapping of line signals provided by the interfaces IF2, IF3 from other input ports onto other output ports of the framer FR can be also carried out by the framer FR, which is not explicitly shown in figure 1. In other words, the framer FR maps one or more sequential signals received at respective input ports FIP1, ..., FIP4 of the framer FR onto output ports FOP1, ..., FOP3 as TDM slotted signals.

In such a mapping step, the framer FR may not only mapx the received sequential signals onto TDM slotted signals provided at the output ports FOP, but may also furthermore generate the TDM slotted signals, by generating and/or terminating one or several overhead sections for these TDM slotted signals. For example, when mapping the sequential signals from the ports FIP1, ..., FIP4 onto TDM slotted signals, the framer FR may build an ODU-k signal including an overhead part as known from the technology of OTN.

The framer FR contains furthermore a control interface CIF1, via which the framer is configurable by means of one or more control signals. The I/O-card IO may comprise a back panel connector pin of a back panel connector BPC, which is connected to the interface CIF1. Alternatively, the I/O-card IO may comprise a control unit, not explicitly shown in figure 1, which is connected to the interface CIF1 of the framer and which is also connected to one or several pins of the back panel connector BPC, in which case the control unit of the I/O-card receives one or more control signals via the back panel connector BPC and then provides one or more control signals to the control interface CIF1 for configuring the framer FR.

The respective data rates of the TDM slotted signals provided at the framer output ports FOP1, ..., FOP3 may differ from each other. Preferably, these respective data rates are equal for those output ports FOP1, ..., FOP3, onto which a same input data signal is mapped.

The framer FR is configurable in the way, that the chosen mapping interconnecting the input ports FIP with the output ports FOP is reconfigurable and in that different input ports may be connected via the mapping to different output ports. Furthermore, the data rates of the TDM slotted signals provided at the respective output ports FOP are reconfigurable.

The I/O-card IO comprises furthermore a TDM switch NTDM. The output ports FOP of the framer FR are physically interconnected via direct connections to respective ports P of the TDM switch NTDM. Internal interconnections of output ports of the framer FR, at which TDM slotted signals provide the input data signals of the interfaces IF2 and IF3, may be present at the TDM switch NTDM but are not explicitly shown in figure 1 for reasons of simplicity.

To summarize the above, the switch NTDM comprises a first number of ports P that are connected to respective ones of the output ports FOP of the signal framer FR.

The switch NTDM comprises furthermore a second number of ports P11, P12, P13, ..., P1N, that are connected to respective pins PIN1, PIN2, PIN3, ..., PINN of the back panel connector BPC.

The switch NTDM is a switch, that is preferably operable to switch any incoming TDM slot received at any port into any TDM slot of any other port. Therefore, the switch NTDM is able to switch the TDM slotted signals received at the ports P1, P2, P3 onto the ports P11, P12, P13 connected to the back panel connector BPC. Thereby, the switching configuration of the switch NTDM determines, at which pins PIN1, PIN2, PIN3 of the back panel connector BPC the switched TDM signals containing the input data signal of the interface IF1 received at the ports P1, ..., P3 are present.

The TDM switch NTDM is preferably non-blocking. Alternatively, it may be a partially blocking switch in the case that the arrangement of all TDM switches NTDM on the I/O cards of the system yields a configuration that supports non-blocking TDM connectivity between the different input data signals of the different line interfaces. This can also be achieved with partially blocking TDM switches. In other words, the combination of all the TDM switches NTDM on the I/O cards IO1, ..., 104 that are present in the system, meshed via the backplane system BPS, forms a logical, non-blocking TDM switch able to interconnect any data signal received at any input port IF on any I/O card to any other data signal on any port on any I/O card.

In addition to a 1:1 interconnection of data flows from one switch NTDM port to another, a switch NTDM may perform multi-cast or broad-cast connections, i.e. connecting one input data flow to several output data flows. In addition, the TDM switch NTDM may also be configured not to connect certain input data flows to any of its output ports.

The configuration of the switch NTDM is possible via a control interface CIF2 of the switch NTDM. The control interface CIF2 is either connected to one or more control pins of the back panel connector BPC, which is not shown explicitly in figure 1. Alternatively, the control interface CIF1 is connected to the previously mentioned controller of the I/O-card, wherein this controller is connected to one or more control pins of the back panel connector BPC for receiving one or more control signal. The configuration signals provided at that control interface CIF determine the configuration of the switch NTDM.

Preferably, each of the ports P1, P2, P3 of a group of ports onto which a specific input data signal is mapped has a same respective number of corresponding TDM slots per time instance.

A person skilled in the art can perceive, that the proposed I/O-card makes it possible to perform TDM switching of line signals received at the interfaces IF1, IF2, IF3 of the card IO onto different pins of the back panel connector BPC using the framer FR and the TDM switch NTDM. This TDM switching is determined by the configuration of the framer FR and the configuration of the TDM switch NTDM.

In other words, the proposed I/O-card implements a TDM switching function right on the I/O-card, such that in a system, in which different ones of such I/O-cards are interconnected different via a back panel mesh, no further additional TDM switching by a separate TDM switch card is necessary. Thus, the initial costs for establishing a TDM switching system are not dependent anymore on a separate TDM switching card present within such a TDM switching system. In other words, this leverages a certain design of interconnection of the I/O-cards directly onto the I/O-cards themselves, thus providing a much better scaling of cost and allowing unlimited configurability of the I/O-cards and thus also provides better system availability.

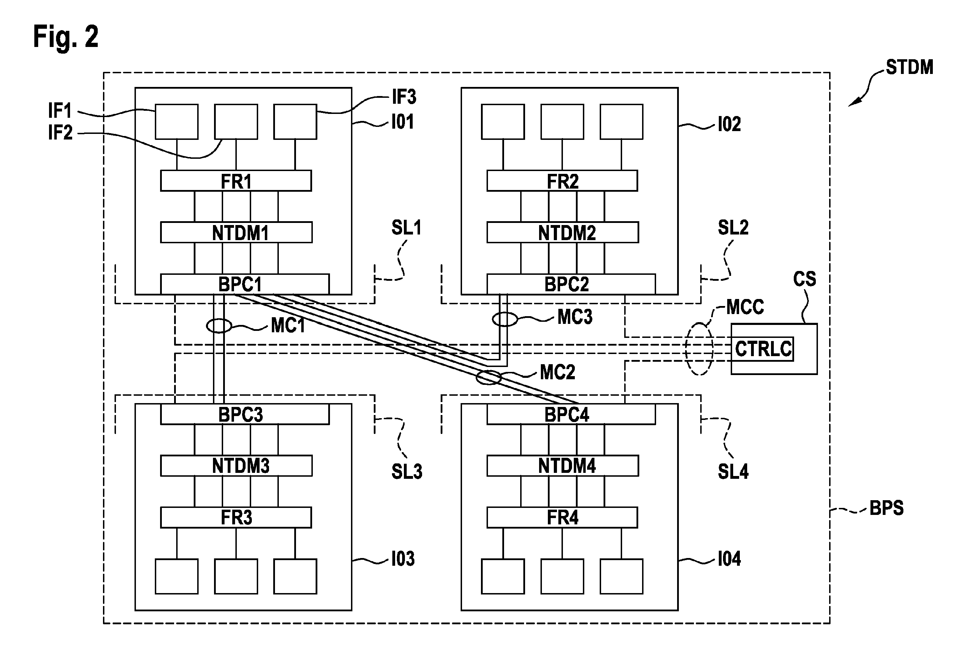

Figure 2 shows a TDM switching system STDM comprising a number of I/O-cards IO1, ..., 104. The I/O-cards are of the type as previously described with regard to figure 1. For example, the I/O-card 101 contains interface IF1, IF2, IF3, a framer FR1, a TDM switch NTDM1 and a back panel connector BPC1. Figure 2 shows further equivalent I/O-cards 102, 103, 104. It has to be noted that the description describing a use of four I/O cards is only an example, the description equally applies to arrangements with a number of I/O cards other than four.

The I/O-cards IO1, ..., 104 are placed inside a back panel system BPS. The back panel system BPS comprises a number of back panel slots SL1, ..., SL4 that are connectable to the respective IO cards IO1, ..., IO4.

The back panel system BPS comprises furthermore a control card slot CS that is connectable to a control card CTRLC. The function of the control card CTRCL is preferably combined with other functions of the system, e.g. a power supply, on a combined card, not explicitly shown in the Figures.

Furthermore, the back panel system BPS comprises a back panel mesh indicated as interconnections MC1, MC2, MC3 and MCC. These interconnections are preferably electrical. The back panel mesh interconnects directly pins of different ones of the back panel slots SL1, ..., SL4. Furthermore, the back panel mesh interconnects pins of the control card slot CS with pins of the back panel slots SL1, ..., SL4.

The I/O-cards IO1, ..., 104 are connected via their respective back panel connectors BPC1, ..., BPC4 to the respective back panel slots SL1, ..., SL4 of the back panel system BPS.

The control card CTRLC is connectable to the control card slot CS. The control card CTRLC is furthermore operable to provide at its output ports control signals for configuring the framers FR1, ..., FR4 and the respective TDM switches NTDM1, ..., NTDM4 of the I/O-cards IO1, ..., 104.

In other words, the TDM switching system STDM comprises at least two I/O-cards, the back panel system BPS and at least one control card CTRLC. It has to be noted that the control card CTRLC may be a separate card. Alternatively, the control card CTRLC may be combined with other functions of the TDM switching system STDM on one card. It has to be noted further, that the description describing a system with with one control card CTRLC only does not preclude to have several instances of control cards CTRLC, e.g. for equipment protection of the control function.

To summarize the interconnections of the back panel mesh, the mesh of the back panel system BPS interconnects via one or more connections, indicated as MC1, the slot SL1 with the slot SL3. Furthermore, the mesh of the back panel system BPS connects via one or more connections, indicated as MC2, the slot SL1 with the slot SL4. Furthermore, the mesh of the back panel connects via one or more connections, indicated as MC3, the slot SL1 with the slot SL2.

In other words, the back panel mesh interconnects directly pins of different ones of the back panel slots SL1, SL2, SL3, SL4 and furthermore interconnects directly pins of the control card slot CS with pins of the back panel slots SL1, SL2, SL3, SL4. Preferably, the mesh provided by the back panel system BPS between the I/O-cards is a full mesh, while alternatively non-full mesh arrangements can be used as long as this allows to form a logical non-blocking TDM switch across all I/O cards, consisting of the individual TDM switches NTDM on the I/O cards meshed via the back panel system BPS.

The connections from the pins of the control card slot CS are indicated as connections MCC that extend towards pins of the back panel slots SL1, SL2, SL3, SL4.

Using the switching ability of the switch NTDM1 of the I/O-card IO1, it becomes clear, that the configurability of the switch NTDM1 allows to decide, via which connections MC1, MC2, MC3 TDM slotted signals are provided from the switch NTDM1, and thus from a certain line interface of the card IO1, to other pins of another back panel connector of a respective I/O-card. For example, the configuration of the switch NTDM1 may establish a switching of the TDM slotted signals via the interconnections MC1 to the slot SL3. The switch NTDM3 may then provide the received TDM slotted signals to its framer FR3. The framer FR3 may then de-map the TDM slotted signals into respective sequential signals as one or more sequential signals. These sequential signals may then be provided to a line interface of the I/O card 103. Optionally, TDM overhead sections may be generated and/or terminated before the signal is provided to a line interface. Thus, the configuration of the switches NTDM1 and NTDM3 in combination with the configuration of the framers FR1 and FR 3 determines the actual switching of a line signal received at a line interface of the card IO1 to another line interface of the other card 103.

It is clear for a person skilled in the art, that a TDM switching of the input data signals of the line interfaces is established within the switching system STDM without any separate TDM switching card but only by means of the at least two I/O cards IO1, ..., 104 carrying respective TDM switches NTDM1, ..., NTDM4.

This TDM switching carried out by the system STDM is controlled via the control card CTRLC that configures the system STDM, by configuring the framers FR1, ..., FR4 and the TDM switches NTDM1, ..., NTDM4 of the respective I/O-cards IO1, ..., 104.

It may be the case that the back panel system BPS contains or comprises further free slots, not shown explicitly yet in figure 2, that are also interconnected via the back panel mesh of the back panel system BPS to the different other slots. Using the proposed invention, it becomes possible to increase the number of I/O-cards, and thus also the number of line interfaces, within the switching system STDM for increasing the TDM switching functionality of the system STDM without having to provide a switching card with a certain switching ability at the initial configuration or initial installation. Instead, all that has to be provided at the initial installation, is the proposed back panel system together with the proposed control card, wherein the control card CTRLC is able to address the different TDM switches and the framers of the I/O-cards that may be installed later on.

It is clear for a person skilled in the art, that the proposed TDM switching system STDM forms or represents logically a non-blocking TDM switching function. In other words, the proposed TDM switching system STDM is logically a non-blocking TDM switch.

The resulting Time Division Multiplex Switching System is capable of providing non-blocking connectivity for data signals between all its interfaces, called line ports. This is achieved without the need for one or more separate switching cards performing TDM switching.

The interconnections and the signal directions described above are described as unidirectional for simplicity of description only. It is clear for a person skilled in the art, that these interactions and signal direction indicate bi-direction interconnections and signal directions, i.e. the input of a component acts at the same time as the output of the same component for a signal flowing into the other direction. The system consequently supports bidirectional traffic flows as e.g. defined by SDH/Sonet and OTN.

To summarise the advantages of the proposed TDM switching system STDM and the proposed I/O-card IO:
- the proposed system STDM and the proposed I/O-cards IO as well as the proposed back panel system BPS provide a lower initial system cost for TDM switching systems;
- incremental costs only come into play as additional I/Ocards are added to the system;
- not concentrating TDM switching on one or more separate switching cards provides a higher system availability;

In the proposed system, the TDM switching function is not implemented on separate switching cards but on the I/O-cards themselves. This means, that a customer has to pay only for incremental costs as incremental numbers of I/O-cards are added to the system later on.

In the proposed system, there is no dependence on a central switch card, which results in a higher system availability or reliability. This is especially the case, since each I/O-card only fails alone and does not affect the other I/O-cards. Thus, there is no need for an equipment protection switching (EPS) scheme for one or several switching cards.

The system furthermore provides complete freedom for card configuration in the sense, that each slot can carry each card type independently of other card types present within other slots. Furthermore, any partial configuration of the different I/O-cards is supported. There is no need for specific slots reserved for separate switching cards.

The functions of the various elements shown in the figures., including any functional blocks labeled as 'control card', 'framer' or 'switch', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of these terms 'control card', 'framer' or 'switch', should not be construed to refer exclusively to hardware capable of executing software, and may implicitly include, without limitation, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figure are conceptual only. Their function may be carried out through the operation of program logic, through dedicated logic, through the interaction of program control and dedicated logic, the particular technique being selectable by the implementer as more specifically understood from the context.

## Claims

1. Input/Output (I/O)-Card for a Time Division Multiplex (TDM) Switching System,
comprising
- a back panel connector (BPC) comprising a number of pins (PIN) that are connectable to a back panel system (BPS),
- at least one control interface (CIF1, CIF2),
- at least one line interface (IF1), operable to receive at its input an input data signal having a fixed data rate,
- at least one signal framer (FR), which is configurable via said control interface (CIF1, CIF2) to map said input data signal from one or more of its input ports (FIP1, ..., FIP4) onto one or more TDM slot signals provided at respective ones of its output ports (FOP1, FOP2, FOP3),
- a TDM switch (NTDM), comprising a first number of ports (P1, P2, P3) that are connected to respective ones of said output ports (FOP1,FOP2,FOP3) of said signal framer (FR), said switch (NTDM) furthermore comprising a second number of ports (P11, P12, P13) that are connected to respective pins (PIN1, PIN2, PIN3) of said back panel connector (BPC), wherein said TDM switch (NTDM) is configurable via said control interface(CIF1, CIF2) to choose a switching of said TDM slot signals received from said framer (FR) at said first ports (P1, P2, P3) of said switch onto one or more of said second ports (P11, P12, P13) of said switch (NTDM).

2. I/O-Card according to claim 1,
wherein an input data signal is an Ethernet signal, SDH signal or an OTN signal.

3. I/O-Card according to claim 1,
wherein said input ports (FIP1, .., FIP4) of said framer (FR) physical input ports and wherein a set of input ports (FIP1, ..., FIP4) to which a specific line interface (IF1) is connected forms a logical port.

4. I/O-Card according to claim 1,
wherein a line interface (IF1, ..., IF3) is directly configurable to support an input data signal of a specific data rate.

5. I/O-Card according to claim 1,
wherein said framer (FR) furthermore generate said TDM slotted signals, by generating one or several overhead sections of said TDM slotted signals.

6. I/O-Card according to claim 1,
wherein said framer (FR) configurable in that a mapping interconnecting said the input ports of said framer (FR) with said output ports of said framer (FR) is reconfigurable and in that one or more of said input ports of said framer (FR) is connectable via said mapping to one or more of said output ports of said framer (FR).

7. I/O-Card according to claim 1,
wherein the respective data rates of respective TDM slotted signals provided at respective output ports of said framer (FR) are reconfigurable.

8. I/O-Card according to claim 1,
wherein said TDM switch (NTDM) is operable to switch any incoming TDM slot received at any of its first ports port into any TDM slot of any of its second ports.

9. Back Panel System,
comprising
- a number of back panel slots (SL1, SL2, SL3, SL4) connectable to respective Input/Output (I/O)-cards (IO1, 102, IO3, IO4),
- at least one control card slot (CS) connectable to a control card (CTRL),
- a back panel mesh, directly interconnecting pins of different ones of said back panel slots (SL1, SL2, SL3, SL4) and furthermore interconnecting pins of said control card slot (CS) with pins of said back panel slots (SL1, SL2, SL3, SL4),
- at least one control card (CTRL), connectable to said control card slot (CS) and furthermore operable to provide at its output ports control signals for configuring a framer (FR) and a TDM switch (NTDM) of an I/O-card (IO1, IO2, IO3, IO4).

10. Time Division Multiplex (TDM) Switching System,
comprising
- at least two Input/Output (I/O)-Cards according to claim 1,
- a back panel system (BPS) according to claim 9, and
- at least one control card (CTRL), connectable to the control card slot (CS) of said back panel system and furthermore operable to provide at its output ports control signals for configuring a framer (FR) and a TDM switch (NTDM) of said I/O-cards.
